# EUROPEAN PATENT APPLICATION

(11) **EP 3 862 585 A1**
(43) Date of publication of application: **11.08.2021**
(21) Application number: 19868754.3
(22) Date of filing: 02.09.2019
(51) Int. Cl.: F16C 11/06, F16J 3/04, F16J 15/52

(54) **DUST COVER**

(30) Priority: 01.10.2018 JP 2018186850
(71) Applicant: NOK Corporation, Tokyo 105-8585 (JP)
(72) Inventor: SATO Norihito, Makinohara-shi, Shizuoka 421-0532 (JP)
(74) Representative: Global IP Europe Patentanwaltskanzlei
(86) International application number: PCT/JP2019/034429
(87) International publication number: WO 2020/071032

(57) **Abstract**

A dust cover which reduces the possibility of buckling occurrence in its body portion is provided. A dust cover 100 is configured to be attached to a ball joint, and includes a body portion 110, a fixed portion 120, a seal portion 130, and a neck portion 140. The body portion 110 includes a first body section 112, a second body section 113, and a bent section 111. The first body section 112 has a minimum thickness T1. The second body section 113 has a minimum thickness T2 that is 1.9 times or more the minimum thickness T1. The fixed portion 120 is arranged on a first end side of the body portion 110 and fastened to the socket 200, and includes a reinforcement ring 121 in the fixed portion. The seal portion 130 is formed only of an elastic material and arranged on a second end side of the body portion 110, and can slide relative to the shaft portion 310 and the coupling member 400. The neck portion 140 is arranged between the body portion 110 and the seal portion 130, and allows the seal portion 130 to tilt relative to the body portion 110. The body portion 110, the fixed portion 120, the seal portion 130, and the neck portion 140 are integrally formed as a unitary component.

## Description

### FIELD

The present disclosure relates to a dust cover used for ball joints.

### BACKGROUND

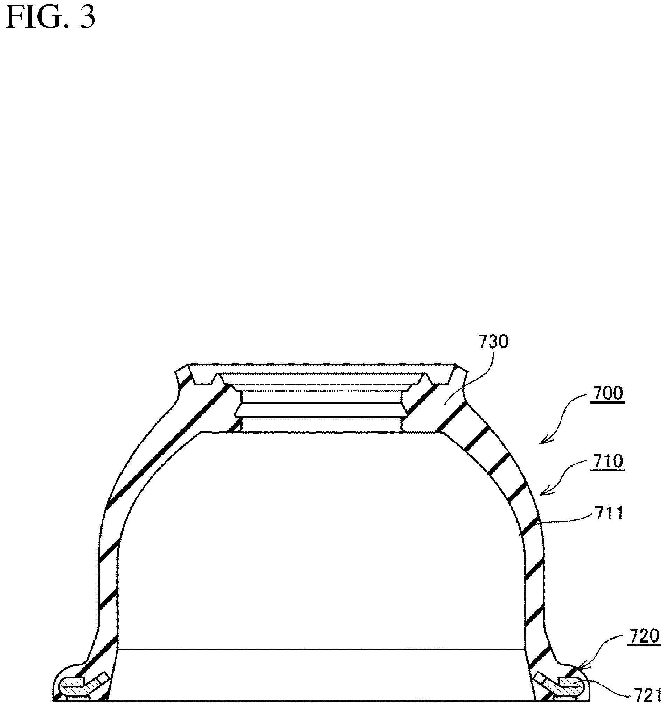

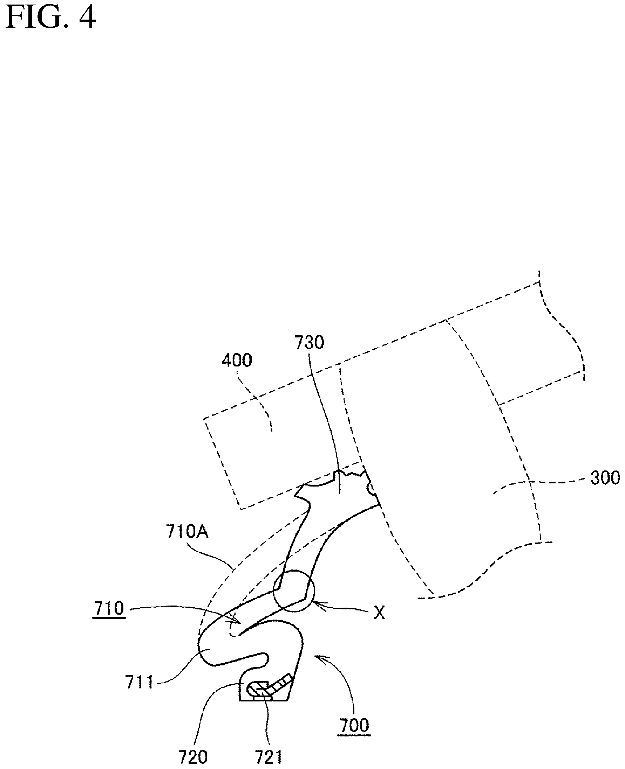

Conventionally, dust covers are used in ball joints included in various types of apparatus such as vehicles to prevent entry of water, dust, and the like into a joint part, and to prevent leakage of grease from the joint part. A dust cover used in a known ball joint (Japanese Patent Laid-Open Publication No. 2000-230540) is described with reference to Figs. 3 and 4. Fig. 3 is a schematic cross-sectional view of the dust cover in the known ball joint. Fig. 4 is an enlarged view of a part of the schematic cross-sectional view showing the dust cover in the known ball joint in use. In Fig. 4, dotted lines show parts of the ball joint.

The ball joint includes a ball stud 300, a socket (not shown), and a knuckle 400. The socket rotatably and pivotably supports the ball stud 300. The knuckle 400 is coupled to the ball stud 300.

The dust cover 700 includes a body portion 710, a fixed portion 720, and a seal portion 730 which are integrally formed as a unitary component. The body portion 710 is a deformable diaphragm. The fixed portion 720 is arranged on one end of the body portion 710, and is fastened to the socket. The seal portion 730 is arranged on another end of the body portion 710. The main part of the dust cover 700 is formed of an elastic material such as rubber. A reinforcement ring 721 is arranged in the fixed portion 720. The seal portion 730 can slide relative to both ball stud 300 and the knuckle 400.

Even when the ball stud 300 pivots or rotates relative to the socket, the dust cover 700 provides its seal function. That is, when the ball stud 300 pivots relative to the socket, the body portion 710 deforms so that the seal portion 730 is kept in contact with the ball stud 300 and the knuckle 400. Also, when the ball stud 300 rotates relative to the socket, the seal portion 730 slides relative to and is kept in contact with the ball stud 300 and the knuckle 400.

However, if the ball stud 300 pivots by a large amount relative to the socket, the body portion 710 may be buckled. A bent section 711 is provided in proximity to the midpoint between the holding portion 720 and the seal portion 730 in the body portion 710. When the ball stud 300 tilts, the bent section 711 brings the body portion 710 in a shape shown by dotted lines 710A in Fig. 4. However, under some use environments, the body portion 710 may brought in a shape shown by solid lines, in other words, buckling X may occur. If buckling X occurs, stress is concentrated on the buckling X, or an inner peripheral surface of the body portion 710 slides on the ball stud 300. Such stress concentration or sliding movement will reduce the life of the dust cover 700.

In the dust cover 700 in which the reinforcement ring 721 is arranged in the fixed portion 720, and the seal portion 730 is formed only of an elastic body material such as rubber, buckling X is likely to occur on the seal portion 730 side with respect to compared with the bent section 711.

### BRIEF SUMMARY

### TECHNICAL PROBLEM

It is an object of the present disclosure to provide a dust cover which reduces the possibility of buckling occurrence in its body portion.

### SOLUTION TO PROBLEM

A dust cover according to the present disclosure is configured to be attached to a ball joint which includes a ball stud including a shaft portion and a spherical portion, a socket rotatably and pivotably supporting the ball stud, and a coupling member connected to the shaft portion on a side opposite to the spherical portion, the dust cover including:
a deformable body portion including
   a first body section having a minimum thickness T1,
   a second body section having a minimum thickness T2 that is 1.9 times or more the minimum thickness T1, and
   a bent section arranged between the first body section and the second body section;
a fixed portion arranged on a first end side of the body portion and configured to be fastened to the socket, the fixed portion including a reinforcement ring in the fixed portion;
a seal portion formed only of an elastic material and arranged on a second end side of the body portion, the seal portion configured to slide relative to the shaft portion and the coupling member; and
a neck portion arranged between the body portion and the seal portion, the neck portion configured to allow the seal portion to tilt relative to the body portion,
wherein the body portion, the fixed portion, the seal portion, and the neck portion are integrally formed as a unitary component.

### ADVANTAGEOUS EFFECTS

According to a dust cover of the present disclosure, the possibility of buckling occurrence in its body portion can be reduced.

### BRIEF DESCRIPTION OF DRAWINGS

Fig. 1 is a schematic cross-sectional view of a ball joint and a dust cover according to an embodiment which is attached to the ball joint.
Fig. 2 is a schematic cross-sectional view of the dust cover according to the embodiment.
Fig. 3 is a schematic cross-sectional view of an exemplary known dust cover.
Fig. 4 is an enlarged view of a part of the schematic cross-sectional view showing the exemplary known dust cover in use.

### DETAILED DESCRIPTION

The following description will illustratively describe a dust cover according to an embodiment with reference to drawings. It is noted that dimensions, materials, shapes, relative arrangement, and the like of components described in the embodiment are not specifically limited unless otherwise specified.

### EMBODIMENT

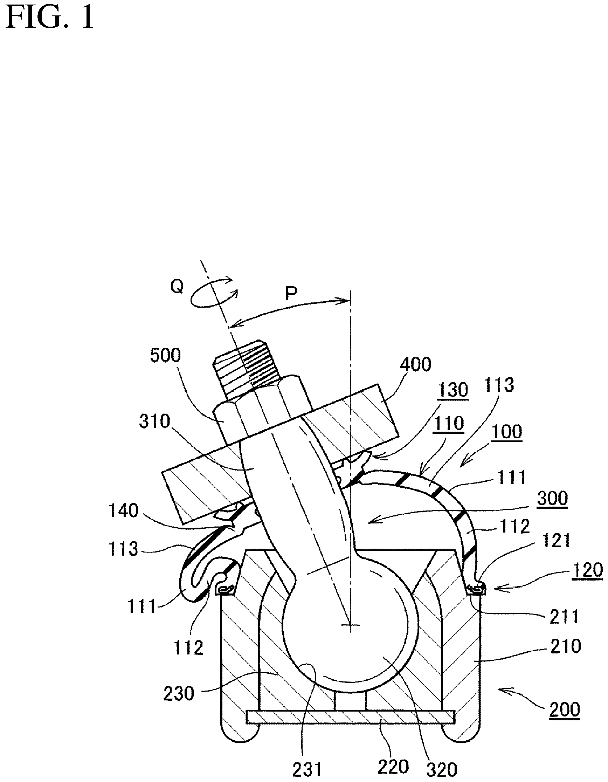

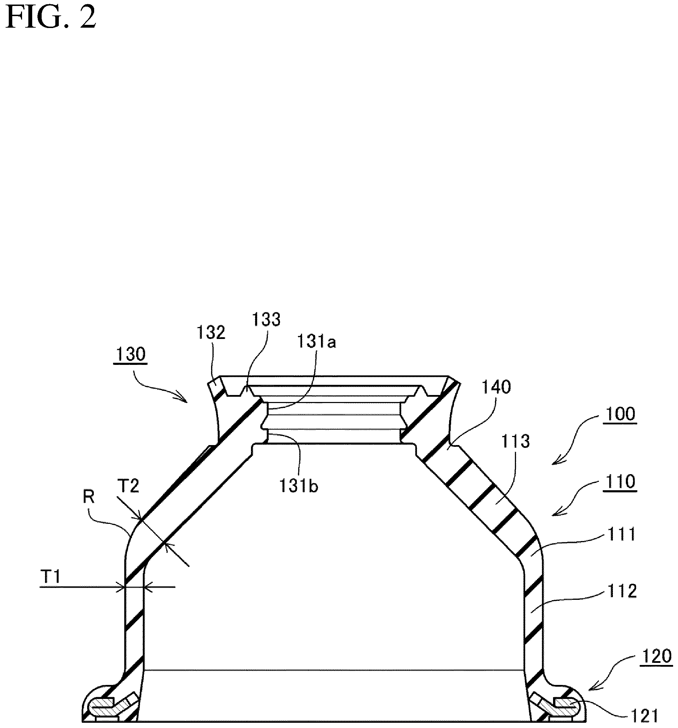

A ball joint and a dust cover according to an embodiment which is attached to the ball joint are now described with reference to Figs. 1 and 2. Fig. 1 is a schematic cross-sectional view of the ball joint and the dust cover according to the embodiment which is attached to the ball joint. More specifically, Fig. 1 shows a cross-sectional view of the dust cover and the like taken along a plane passing through a center axis of a shaft portion of the ball stud included in the ball joint. Fig. 2 is a schematic cross-sectional view of the dust cover according to the embodiment. Any external force is not applied to the dust cover in Fig. 2. When any external force is not applied to the dust cover, the dust cover has an axially symmetric shape. Fig. 2 shows a cross-sectional view of the dust cover taken along a plane passing through the center axis of the dust cover in which any external force is not applied to the dust cover.

### Ball Joint

An exemplary ball joint to which the dust cover according to this embodiment can be attached is described with reference to Fig. 1. The ball joint includes a ball stud 300, a socket 200, and a knuckle 400. The socket 200 rotatably and pivotably supports the ball stud 300. The knuckle 400 serves as a coupling member which is connected to the shaft portion 310 of the ball stud 300.

The ball stud 300 includes a spherical portion 320 on one end of the shaft portion 310. The socket 200 includes an annular case 210, a bottom plate 220, and a bearing 230 for the spherical portion 320. The bottom plate 220 is fastened to the bottom of the case 210. The bearing 230 has a bearing surface 231. The bearing surface 231 is a spherical surface having a radius corresponding to a radius of curvature of the spherical portion 320. The knuckle 400 is connected to the shaft portion 310 on a side opposite to the spherical portion 320 by a nut 500.

The dust cover 100 is attached to the ball joint to prevent entry of water, dust, and the like into a joint part, and to prevent leakage of grease from the joint part.

### Dust Cover

The dust cover 100 according to the embodiment is now described with reference to Fig. 2. The dust cover 100 includes a deformable body portion 110, a fixed portion 120, a seal portion 130, and a neck portion 140. The fixed portion 120 is arranged on a first end of the body portion 110. The seal portion 130 is arranged in a second end of the body portion 110. The neck portion 140 is arranged between the body portion 110 and the seal portion 130. The body portion 110, the fixed portion 120, the seal portion 130, and the neck portion 140 are integrally formed as a unitary component. A reinforcement ring 121 is arranged in the fixed portion 120. The reinforcement ring 121 is formed of a metal or the like. The dust cover 100 is entirely formed of an elastic material such as rubber except the reinforcement ring 121. That is, the seal portion 130 is formed only of an elastic material.

The fixed portion 120 is fastened to the socket 200. The fixed portion 120 can be fastened by press fit (tight fit) by the reinforcement ring 121 to the socket 200.

The seal portion 130 can slide relative to both the shaft portion 310 of the ball stud 300 and the knuckle 400. More specifically, the seal portion 130 includes inner peripheral seal sections 131a and 131b, a dust lip 132, and an auxiliary seal section 133. The inner peripheral seal sections 131a and 131b can slide on the shaft portion 310 of the ball stud 300. The dust lip 132 and the auxiliary seal section 133 can slide on the knuckle 400. The inner peripheral seal sections 131a and 131b are an annular protrusion which protrudes radially inward. The dust lip 132 faces the knuckle 400, and extends radially outward. The auxiliary seal section 133 is an annular protrusion which protrudes toward the knuckle 400.

The neck portion 140 allows the seal portion 130 to tilt relative to the body portion 110. The neck portion 140 can prevent detachment of the seal portion 130 from the shaft portion 310 and the knuckle 400 even without any reinforcement ring arranged in the seal portion 130 and without a member which clamps the outer peripheral surface of the seal portion 130.

### Body Portion

The body portion 110 is described in more detail. The body portion 110 according to this embodiment includes a bent section 111, a first body section 112, and a second body section 113. The first body section 112 is arranged between the bent section 111 and the fixed portion 120. The second body section 113 is arranged between the bent section 111 and the neck portion 140. Where the minimum thickness of the first body section 112 is defined as T1, and the minimum thickness of the second body section 113 is defined as T2, they satisfy T2 ≧ 1.9 X T1. In addition, the bent section 111 has a radius of curvature R not greater than 5 mm on its outer peripheral surface side in a cross section taken along a plane passing through a center axis of the dust cover 100 in which any external force is not applied.

The body portion 110 in the dust cover 100 according to this embodiment deforms when the ball stud 300 pivots relative to the socket 200 (see arrow P in Fig. 1). In addition, the seal portion 130 slides relative to the shaft portion 310 of the ball stud 300 and the knuckle 400 when the ball stud 300 rotates relative to the socket 200 (see arrow Q in Fig. 1). Accordingly, the dust cover 100 provides its seal function in both the pivoting and rotation of the ball stud 300 relative to the socket 200.

Satisfaction of T2 ≧1.9 X T1 in the dust cover 100 according to this embodiment can provide sufficient rigidity difference between of the first body section 112 and the second body section 113. For this reason, when the body portion 110 deforms, the body portion 110 can more reliably bend at the bent section 111. As a result, the possibility of buckling occurrence in the body portion 110 can be reduced. In particular, in the exemplary known dust cover, buckling is likely to occur in a part on the seal portion side relative to the bent section (part corresponding to the second body section 113 in this embodiment). Contrary to this, in the case of the dust cover 100 according to this embodiment, because the second body section 113 has sufficiently higher rigidity than the first body section 112, the possibility of buckling occurrence in the second body section 113 can be further reduced. In addition, because the radius of curvature R of the outer peripheral surface of the bent section 111 is not greater than 5 mm, the body portion 110 is more likely to bend at the bent section 111 when the body portion 110 deforms.

As discussed above, according to this embodiment, the possibility of buckling occurrence in the body portion 110 can be reduced so that stress concentration on a part of the body portion 110 can be reduced. In addition, the possibility of sliding of the inner peripheral surface of the body portion 110 on the ball stud 300 can be reduced. Therefore, the life of the dust cover 100 can be improved.

### Reference Signs List

- 100 ...: Dust Cover
- 110 ...: Body Portion
- 111 ...: Bent Portion
- 112 ...: First Body Portion
- 113 ...: Second Body Portion
- 120 ...: Fixed Portion
- 121 ...: Reinforcement Ring
- 130 ...: Seal Portion
- 131a, 131b ...: Inner Peripheral Seal Section
- 132 ...: Dust Lip
- 133 ...: Auxiliary Seal Section
- 140 ...: Neck Portion
- 200 ...: Socket
- 210 ...: Case
- 220 ...: Bottom Plate
- 230 ...: Bearing
- 231 ...: Bearing Surface
- 300 ...: Ball Stud
- 310 ...: Shaft Portion
- 320 ...: Spherical Portion
- 400 ...: Knuckle
- 500 ...: Nut

## Claims

1. A dust cover configured to be attached to a ball joint which includes a ball stud including a shaft portion and a spherical portion, a socket rotatably and pivotably supporting the ball stud, and a coupling member connected to the shaft portion on a side opposite to the spherical portion, the dust cover comprising:
a deformable body portion including
a first body section having a minimum thickness T1,
a second body section having a minimum thickness T2 that is 1.9 times or more the minimum thickness T1, and
a bent section arranged between the first body section and the second body section;
a fixed portion arranged on a first end side of the body portion and configured to be fastened to the socket, the fixed portion including a reinforcement ring in the fixed portion;
a seal portion formed only of an elastic material and arranged on a second end side of the body portion, the seal portion configured to slide relative to the shaft portion and the coupling member; and
a neck portion arranged between the body portion and the seal portion, the neck portion configured to allow the seal portion to tilt relative to the body portion,
wherein the body portion, the fixed portion, the seal portion, and the neck portion are integrally formed as a unitary component.

2. The dust cover according to claim 1, wherein the bent section has a radius of curvature not greater than 5 mm on its outer peripheral surface side in a cross section taken along a plane passing through a center axis of the dust cover in which any external force is not applied.

3. The dust cover according to claim 1 or 2, wherein the seal portion includes an inner peripheral seal section that is an annular protrusion protruding radially inward.

4. The dust cover according to claim 3, wherein the inner peripheral seal section is slidable on the shaft portion.

5. The dust cover according to any one of claims 1 to 4, wherein the seal portion includes a dust lip configured to face the coupling member, and extending radially outward.

6. The dust cover according to any one of claims 1 to 5, wherein the seal portion includes an auxiliary seal section that is an annular protrusion protruding toward the coupling member.
